**Europäisches Patentamt**

**European Patent Office**

**Office européen des brevets**

(19)

(11) Publication number : **0 395 145 B1**

(12) **EUROPEAN PATENT SPECIFICATION**

(45) Date of publication of patent specification :
23.06.93 Bulletin 93/25

(51) Int. Cl.⁵ : **A23G 9/04,** A23G 9/06,
A23G 9/02, A23G 9/20

(21) Application number : **90200963.8**

(22) Date of filing : **19.04.90**

(54) **Method of preparing a milk shake.**

(30) Priority : **26.04.89 GB 8909492**

(43) Date of publication of application :
**31.10.90 Bulletin 90/44**

(45) Publication of the grant of the patent :
**23.06.93 Bulletin 93/25**

(84) Designated Contracting States :
**AT BE CH DE DK ES FR GB GR IT LI NL SE**

(56) References cited :
**EP-A- 0 201 143**
**EP-A- 0 352 829**
**BE-A- 885 168**
**FR-A- 1 369 692**
**GB-A- 1 050 213**
**US-A- 2 975 603**
**US-A- 3 086 370**
**US-A- 3 255 600**

(56) References cited :
**US-A- 3 333 969**
**US-A- 4 333 315**
**US-A- 4 393 660**
**US-A- 4 398 394**
**US-A- 4 404 807**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Bee, Rodney David**
**10 Stevenson Court, Eton Ford**
**St. Neots PE19 3LF (GB)**

(74) Representative : **Ford, Michael Frederick et al**
**MEWBURN ELLIS 2 Cursitor Street**
**London EC4A 1BQ (GB)**

## Description

The invention relates to a method of preparing a milk shake by mixing usual constituents of a milk shake, comprising frozen and fluid constituents.

A milk shake is usually made by thoroughly mixing milk, ice-cream and a fruity material such as fruit, fruit pulp, jam, fruit syrup etc. to end up with a cold, creamy but fluid product having some overrun. Overrun, defined as the volume percentage of gas, usually air, with relation to the gas-free constituents, is usually originating from the ice cream and from the whipping action of the mixing step. Fast electric mixers are usually used for preparing these milk shakes. Although milk shakes are usually prepared right before their consumption, several examples of their preparation in advance are known in the art with varying success.

Most of the "preserved" milk shakes are deep-frozen products which are to be thawed in a controlled manner either by exposure to the ambient temperature for some time or by exposure to micro-waves. The first method requires considerable time, while the second method is difficult to control because of the different capacities of the micro-wave ovens. In both methods maintaining the overrun at the required level is very difficult if not impossible.

It is an object of the present invention to provide a method for easily preparing a milk shake wherein using a mechanical mixer is not necessary.

The invention provides thereto an easy and convenient alternative for a method of preparing a milk shake by mixing a fluid constituent of a usual milk shake composition selected from the group consisting of water, whole milk, skim milk and mixtures thereof with the balance of said milk shake composition, which method according to the invention is characterized in that the balance is a frozen product which comprises in admixture therewith an edible gas hydrate clathrate at least in an amount sufficient to bring about the required overrun. This mixing can be done by hand and the gas liberated by the decomposing clathrate brings about the aeration of the milk shake.

In order that a suitable level of aeration will be obtained the balance should preferably contain at least 2 ml of hydrated gas per ml although a level of 8 ml hydrated gas per ml is being preferred.

This balance of the milk shake composition can be mixed with the fluid in several embodiments: as preportioned bodies, as a scoopable mass, as coarse particles, each particle being at least 1 ml, but preferably as a unit amount required for making one milk shake and this unit amount supported on a stirring means like a rod, a spoon or a solid tube, preferably a drinking straw. If the product is distributed as a scoopable mass it is preferably scoopable at temperatures usually maintained in domestic freezers, usually between -10°C and -20°C and in particular from -13°C to -18°C.

Suitably $CO_2$, but still better $N_2O$ or a mixture thereof is used as a gas in the gas hydrate clathrate. In this connection may be remarked that using $CO_2$ hydrate clathrate in ice together with flavouring materials and sugar is known from EP-A-27 375 and GB-A-1 116 072. Both documents relate to the carbonation of beverages, such as fruit drinks, cola drinks etcetera and for improving the carbonation effect the former document recommends using a closed pressure vessel.

Using $CO_2$ loaded molecular sieves, such as zeolites, for a similar purpose has been described in US-A 4 025 655 and US-A-4 199 607. These processes need additional cooling and separation of the molecular sieve material from the beverage.

EP-A-201,143 discloses an effervescent ice confection product which is ready for consumption, comprising $CO_2$-water-clathrate particles distributed therein. This product comprises usual constituents for an ice confection product. This document also discloses a method of preparing this product.

US-A-4,398,394 describes using has-hydrate-clathrates as a means for storing and shipping gases and in particular carbon dioxide for use in the home preparation of carbonated drinks. Various materials such as sugar, colourant, flavour, acidulents and the like may be added for that purpose.

FR-A-1,369,392 relates to an ambient stable compacted dry mix for the instant preparation of drinks such as soups and carbonated drinks. For the latter products a carbonate and on acid are contained in the mix. The compacted mix is supported on a stirring means which may be hollow like a drinking straw.

The invention will be explained by the following examples.

Example I

A mixture is prepared of

| msnf* | 9 | parts | by | weight |
|---|---|---|---|---|
| sucrose | 17.5 | " | " | " |
| butterfat | 4.5 | " | " | " |
| stabilizer and emulsifier | 0.3 | " | " | " |
| citric acid | 0.3 | " | " | " |
| water | 20.4 | " | " | " |

*) "msnf" meaning milk solids non fat

After homogenising, 10 parts by weight of strawberry pulp are added and stirred into the mixture which is thereafter frozen while stirring to -5°C. Thereafter 20 parts by weight of mixed $CO_2$ and $N_2O$ hydrate clathrate are stirred into the parfrozen mixture. 65 grams of this mixture are moulded as a cylinder of 4 cm diameter around one end of a 20 cm long plastic tube of 5 mm diameter and frozen hard to -30°C.

For preparing a milk shake, 35 ml of tap water are poured into a mug of 250 ml capacity. The cylinder is put into the mug and stirred into the water using the tube as a stirring rod. A cold, aerated milk shake is obtained.

Example II

A mixture is prepared of

| msnf | 5.1 | parts | by | weight |
|---|---|---|---|---|
| sugars | 16 | " | " | " |
| butterfat | 2.7 | " | " | " |
| stabilizer and emulsifier | 0.3 | " | " | " |
| citric acid and flavour | 0.4 | " | " | " |
| water | 21 | " | " | " |

After homogenising, 8 parts of pardried, sugar-impregnated apricot slices are stirred into the mixture, which is thereafter frozen while stirring to -5°C. Thereafter 12 parts by weight of $N_2O$ hydrate clathrate are stirred into the parfrozen mixture, which is thereafter frozen hard into portions of 50 grams to -30°C.

For preparing a milk shake, 50 ml whole milk (8.7% msnf, 3.6% fat) is put into a carton mug of 250 ml. One portion of the product as described before in this example is dropped into the mug, whereafter the contents are stirred with a long spoon until no frozen solids are detectable. A cold, aerated milk shake is obtained.

In the above examples $N_2O$ hydrate clathrate is used as an aerating agent. $CO_2$ hydrate clathrates may be used with comparable results, however resulting in a more acid taste, which sometimes gives a slightly less attractive overall taste impression.

## Claims

1. A method of preparing a milk shake by mixing a fluid constituent of a usual milk shake composition selected from the group consisting of water, whole milk, skim milk and mixtures thereof with the balance of said composition, characterized in that the balance is a frozen product which comprises in admixture therewith an edible gas hydrate clathrate at least in an amount sufficient to bring about the required overrun.

2. The method according to claim 1, characterized in that said balance contains at least two ml of hydrated gas per ml.

3. The method according to claim 2, characterized in that said balance contains eight ml of hydrated gas

EP 0 395 145 B1

per ml.

4.  The method according to claim 1, 2 or 3, characterized in that said balance is mixed with the fluid while portioned as a unit portion supported on a stirring means.

5.  The method according to claim 1 or 2, characterized in that the balance is mixed with the fluid as a coarse particulate, the volume of each particle being at least 1 ml.

6.  The method according to claim 4, characterized in that the stirring means is a tube and particularly a drinking straw.


**Patentansprüche**

1.  Verfahren zur Herstellung eines Milchmischgetränks durch Mischen eines fließfähigen Bestandteils einer üblichen Milchmischgetränk-Zusammensetzung, ausgewählt aus der Gruppe bestehend aus Wasser, Vollmilch, Magermilch und Mischungen hievon, mit dem Rest der Zusammensetzung, dadurch gekennzeichnet, daß der Rest ein gefrorenes Produkt ist, welches in Mischung damit ein eßbares Gashydrat-Clathrat zumindest in einer Menge enthält, die ausreicht, um den erforderlichen Lufteinschlag zu bewirken.

2.  Verfahren nach Anspruch 1, dadurch gekennzeichnet, daß der Rest zumindest 2 ml hydratisiertes Gas pro ml enthält.

3.  Verfahren nach Anspruch 2, dadurch gekennzeichnet, daß der Rest 8 ml hydratisiertes Gas pro ml enthält.

4.  Verfahren nach Anspruch 1, 2 oder 3 dadurch gekennzeichnet, daß der Rest mit dem Fluid gemischt wird, während er als eine von einem Rührmittel getragene Einheitsportion portioniert wird.

5.  Verfahren nach Anspruch 1 oder 2, dadurch gekennzeichnet, daß der Rest mit dem Fluid als grobes Teilchenmaterial gemischt wird, wobei das Volumen jedes Teilchens zumindest 1 ml beträgt.

6.  Verfahren nach Anspruch 4, dadurch gekennzeichnet, daß das Rührmittel ein Rohr und insbesondere ein Trinkhalm ist.


**Revendications**

1.  Procédé de préparation d'un milk-shake en mélangeant un constituant fluide d'une composition usuelle de milk-shake choisi parmi l'eau, le lait entier, le lait écrémé et des mélanges de ceux-ci avec le complément de ladite composition, caractérisé en ce que le complément est un produit réfrigéré qui comprend en mélange avec lui un clathrate hydraté gazeux comestible au moins en une quantité suffisante pour amener le débordement de mousse nécessaire.

2.  Procédé selon la revendication 1, caractérisé en ce que ledit complément contient au moins 2 ml de gaz hydraté par ml.

3.  Procédé selon la revendication 2, caractérisé en ce que ledit complément contient 8 ml de gaz hydraté par ml.

4.  Procédé selon la revendication 1, 2 ou 3, caractérisé en ce qu'on mélange ledit complément avec le fluide sous forme d'une portion unitaire supportée par un dispositif d'agitation.

5.  Procédé selon la revendication 1 ou 2, caractérisé en ce qu'on mélange le complément avec le fluide sous forme d'un produit particulaire grossier, le volume de chaque particule étant d'au moins 1 ml.

6.  Procédé selon la revendication 4, caractérisé en ce que le dispositif d'agitation est un tube et, en particulier une paille.

4